# EUROPÄISCHE PATENTANMELDUNG

(11) **EP 1 500 538 A2**
(43) Veröffentlichungstag der Anmeldung: **26.01.2005**
(21) Anmeldenummer: 04016383.4
(22) Anmeldetag: 13.07.2004
(51) Int. Cl.: B60J 7/02

(54) **Kraftfahrzeug**

(30) Priorität: 17.07.2003 DE 10332499
(71) Anmelder: DaimlerChrysler AG, 70567 Stuttgart (DE)
(72) Erfinder: Marold, Adolf, 71139 Ehningen (DE); Moll, Ulrich, 71134 Aidlingen (DE); Zipperle, Siegfried, 71134 Aidlingen (DE)

(57) **Zusammenfassung**

Die Erfindung betrifft ein Kraftfahrzeug, insbesondere ein zweisitziges Cabriolet, mit einem zu öffnenden Verdeck (2), das eine vordere Dachschale (6) und eine hintere Dachschale (7) aufweist, wobei in einem geschlossenen Zustand des Verdecks (2) die Dachschalen (6,7) eine durchgehende Dachfläche bilden und eine Dachöffnung (28) zwischen einer A-Säule (29) und einer B-Säule (30) verdecken, wobei in einem geöffneten Zustand des Verdecks (2) die Dachschalen (6,7) in einen Stauraum (3) eingefahren sind, welcher hinter den Fahrzeugsitzen (4) und vor einer Schottwand (5) angeordnet ist. Erfindungswesentlich ist dabei, dass die beiden Dachschale (6,7) jeweils einen zweischaligen Aufbau aufweisen und dass die Dachschalen (6,7) zum Öffnen des Verdecks (2) ineinander schiebbar ausgebildet sind.

## Beschreibung

Die Erfindung betrifft ein Kraftfahrzeug, insbesondere ein zweisitziges Cabriolet, mit einem zu öffnenden Verdeck gemäß dem Oberbegriff des Anspruchs 1.

Aus der DE 296 20 492 U1 ist ein derartiges Cabriolet-Fahrzeug bekannt, das ein zu öffnendes Verdeck mit einer vorderen Dachschale und einer hinteren Dachschale aufweist, wobei in einem geschlossenen Zustand des Verdecks die Dachschalen eine durchgehende Dachfläche bilden und eine Dachöffnung zwischen einer A-Säule und einer B-Säule verdecken. In einem geöffneten Zustand des Verdecks sind die beiden Dachschalen in einen Stauraum eingefahren sind, welcher hinter den Fahrzeugsitzen und vor einer Schottwand angeordnet ist. Bei geöffnetem Verdeck sind die Dachschalen übereinander angeordnet, so dass eine Außenseite der vorderen Dachschale einer Innenseite der hinteren Dachschale benachbart ist.

Aus der DE 43 24 708 C2 ist ein versenkbares Dach für Fahrzeuge, insbesondere für zweisitzige Cabriolets, bekannt, mit einer eine Dachplatte und hintere Dachpfosten aufweisenden Dachschale, die mit den Dachpfosten voran der Länge nach in einen Unterbringungsraum zwischen seitlichen Bordwänden der Karosserie hinein bewegbar ist. An der Dachplatte ist gleichzeitig eine Heckscheibe verstellbar gelagert, wobei bei geöffnetem Verdeck die Dachplatte samt Heckscheibe als ganzes in den Unterbringungsraum einfährt.

Aus der DE 196 35 537 C1 ist ein zweiteiliges Hardtop bekannt, dessen Heckteil auf einem Karosseriezwischendeckel positioniert ist. Zum Absenken des Heckteils unter die Fahrzeugbordkante muss zwischen dem Heckteil und dem Karosseriezwischendeckel eine Relativbewegung vorgenommen werden. Anschließend wird der Karosseriezwischendeckel nach oben geschwenkt und das Heckteil nach unten abgesenkt. Hierbei sind das Heckteil und der Karosseriezwischendeckel in ihrem rückseitigen Endbereich um eine gemeinsame, horizontale und quer zur Fahrzeuglängsrichtung verlaufenden Schwenkachse schwenkbeweglich gelagert. Der Karosseriezwischendeckel ist gemeinsam mit dem Heckteil in eine in den Frontbereich nach unten versenkte und unterhalb der Fahrzeugbordkante befindliche Ruheposition verschwenkbar. Dabei führen die beiden Teile des Hardtops beim Öffnen und beim Schließen zeitweilig eine gegenläufige Schwenkdrehbewegung aus.

Aus der DE 41 00 240 C1 ist ein versenkbares Fahrzeugdach mit einer formsteifen Dachschale in einem vorderen Endbereich des Daches bekannt. Die formsteife Dachschale erstreckt sich über die gesamte Dachbreite und ist bei geschlossenem Dach lösbar mit einem ihrer vorderen Stirnfläche gegenüber liegenden Rahmenprofil eines Frontscheibenrahmens verbunden. Bei geöffnetem Dach ist die Dachschale in einer hinter einem Sitzbereich liegenden Querebene des Fahrzeugs gehalten, wobei die um eine horizontale Fahrzeugquerachse geschwenkte Dachschale bezogen auf die Gürtellinie des Fahrzeugs nach oben übersteht und im überstehenden Längenbereich eine im wesentlichen mittig zur Fahrzeugbreite gelegene Durchsichtsöffnung aufweist.

Aus der EP 0 857 597 A1 ist ein Kraftwagen mit einem zu öffnenden Verdeck bekannt, das zwei übereinanderfahrbare Dachschalen aufweist, die um eine gemeinsame Querachse nach unten in einen Stauraum einschwenkbar sind.

Die vorliegende Erfindung beschäftigt sich mit dem Problem, für ein Kraftfahrzeug eingangs erwähnter Art eine verbesserte Ausführungsform anzugeben, die es insbesondere ermöglicht, das Verdeck einfach und schnell von einem geöffneten in einen geschlossenen Zustand und umgekehrt zu verstellen, wobei das Verdeck in geöffnetem Zustand besonders platzsparend im Fahrzeug verstaubar sein soll.

Diese Aufgabe wird durch den Gegenstand des unabhängigen Anspruchs gelöst, vorteilhafte Ausgestaltungen sind Gegenstand der abhängigen Ansprüche.

Die Erfindung beruht auf dem allgemeinen Gedanken, bei einem Kraftfahrzeug, insbesondere bei einem zweisitzigen Cabriolet, mit einem eine vordere und eine hintere Dachschale aufweisenden und zu öffnenden Verdeck die beiden Dachschalen jeweils zweischalig auszubilden, derart, dass sie zum Öffnen des Verdecks ineinander schiebbar sind.

Durch die erfindungsgemäße Lösung wird ein zweiteiliges Dachsystem mit jeweils zweischaligen Dachschalen geschaffen, welches es dem Fahrer erlaubt, das Verdeck einfach und schnell zu öffnen und/oder zu schließen, da hierzu insbesondere die Fahrzeugsitze nicht umgeklappt werden müssen. Die kurzen Handlingszeiten sowie die geringen Bedienkräfte und die Ganzjahrestauglichkeit der Konstruktion bieten zudem Vorteile gegenüber herkömmlichen Verdecken. Des weiteren benötigt das Verdeck im geöffneten Zustand extrem wenig Stauraum, obwohl es grundsätzlich als Hardtop ausgestaltet werden kann. Bei geschlossenem Verdeck gewährleistet die Erfindung hinsichtlich der Fahrzeugoptik, der Klimatisierung, der Aufheizung und der Windgeräusche, ein von herkömmlichen Coupés bekanntes hohes Komfortniveau.

Gleichzeitig bietet die zweischalige Ausbildung des Verdecks und die damit verbundene Möglichkeit des Ineinanderschiebens der beiden Dachschalen, dass das Verdeck in geöffnetem Zustand vollständig und platzsparend hinter den Fahrzeugsitzen in dem dafür vorgesehenen Stauraum unterbringbar ist. Der Stauraum ist dabei nicht Bestandteil eines Koffer- und/oder Laderaums des Cabriolets, so dass ein Versenken des Verdecks in diesen Stauraum keine Beeinträchtigung eines Laderaumvolumens zur Folge hat und zugleich keine negativen Beeinträchtigungen von aerodynamischen Kennwerten, wie sie beispielsweise bei herkömmlichen Cabriolets zu beobachten sind, zu erwarten sind.

Gemäß einer bevorzugten Ausführungsform der Erfindung kann auf jeder Fahrzeugseite jeweils eine an der Karosserie angeordnete karosserieseitige erste Führung sowie jeweils ein entsprechendes darin eingreifendes, an der hinteren Dachschale angeordnetes, verdeckseitiges erstes Führungsglied vorgesehen sein. Das erste verdeckseitige Führungsglied wird während des Öffnens und/oder des Schließens entlang der ersten karosserieseitigen Führung verstellt, wodurch indirekt eine Dreh-Schwenkbewegung des Verdecks erreicht wird. Durch einen S-förmigen Verlauf der ersten karosserieseitigen Führung in einem oberen Bereich kann beispielsweise eine parabelförmige Bewegung des Verdecks beim Öffnen und/oder beim Schließen erreicht werden, wodurch eine stets ausreichende Kopffreiheit der Fahrzeuginsassen gewährleistet wird.

Zweckmäßig kann vorgesehen sein, dass der Verstellmechanismus, d.h. die karosserie- und verdeckseitigen Führungen, bzw. Führungsglieder so ausgebildet und angeordnet sind, dass das Verdeck im Offenzustand im wesentlichen nahe und entlang einer rückwärtigen Sitzkontur angeordnet ist. Dies bietet den großen Vorteil, dass das Kofferraumvolumen unabhängig von der Dachfunktion, d.h. unbeeinträchtigt durch das geöffnete Verdeck bleibt, da dieses platzsparend hinter den Fahrzeugsitzen und vor der Schottwand verstaubar ist. Ein bei herkömmlichen Cabriolets notwendiges Öffnen von Stauraumklappen (z.B. eines Verdeckkastendeckels) kann ebenfalls entfallen, wodurch der Bedienkomfort zusätzlich erhöht wird.

Gemäß einer bevorzugten Weiterbildung kann zum Öffnen und/oder zum Schließen des Verdecks eine Antriebseinrichtung vorgesehen sein. Die Antriebseinrichtung bewirkt auf einen Steuerungsbefehl hin ein automatisches Öffnen und/oder Schließen des Verdecks und erhöht damit den Bedienkomfort. Zudem ermöglicht die Antriebseinrichtung kleineren, schwächeren und/oder körperlich beeinträchtigten Personen ein problemloses Öffnen und Schließen des Verdecks.

Weitere wichtige Merkmale und Vorteile der Erfindung ergeben sich aus den Unteransprüchen, aus den Zeichnungen und aus den zugehörigen Figurenbeschreibungen anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in den nachfolgenden Beschreibungen näher erläutert, wobei sich Bezugszeichen auf gleiche oder ähnliche oder funktional gleiche Bauteile beziehen.

Dabei zeigen:
- Fig. 1: einen Längsschnitt durch einen Dachbereich eines erfindungsgemäßen Fahrzeugs bei geschlossenem Verdeck,
- Fig. 2: einen Schnitt wie in Fig. 1, jedoch bei teilweise geöffnetem Verdeck,
- Fig. 3: einen Schnitt wie in Fig. 2, jedoch bei weiter geöffnetem Verdeck,
- Fig. 4: einen Schnitt wie in Fig. 3, jedoch bei vollständig geöffnetem Verdeck.

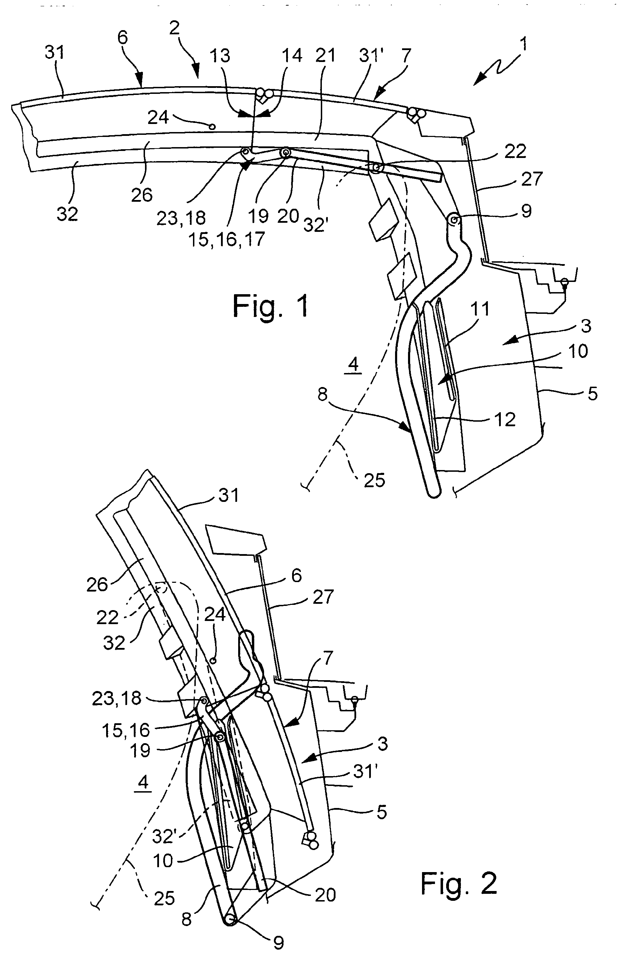

Entsprechend Fig. 1 weist ein erfindungsgemäßes Kraftfahrzeug 1 ein zu öffnendes Verdeck 2 auf, welches in geschlossenem Zustand eine Dachöffnung 28 zwischen einer A-Säule 29 und einer B-Säule 30 verdeckt und einen nicht näher bezeichneten Fahrgastraum nach oben begrenzt. Das Verdeck 2 kann sowohl als Hardtop als auch als ein mit einer Stoffdachbahn bespanntes Verdeck ausgestaltet sein. Der Fahrgastraum weist vorzugsweise zwei quer zur Fahrtrichtung parallel nebeneinander angeordnete Fahrzeugsitze 4 auf und wird an einem in Fahrtrichtung gesehen hinteren Ende durch eine Schottwand 5 begrenzt, wobei zwischen einer rückwärtigen Sitzkontur 25 und der Schottwand 5 ein Stauraum 3 angeordnet ist.

Das zu öffnende Verdeck 2 weist eine vordere Dachschale 6 und eine hintere Dachschale 7 auf, welche jeweils zweischalig aufgebaut sind und welche zum Öffnen des Verdecks 2 ineinander einschiebbar ausgebildet sind. Die vordere Dachschale 6 weist eine Oberschale 31 und eine Unterschale 32 auf und ist ähnlich eines U-Profils an drei Seiten geschlossen, nämlich der Ober- und Unterseite sowie einer Vorderseite. An einer Hinterkante 13 ist die vordere Dachschale 6 offen. Vom Aufbau her spiegelbildlich dazu gesehen ist die hintere Dachschale 7 ausgebildet, d.h. auch diese besitzt eine Oberschale 31' und eine Unterschale 32' sowie eine Vorderkante 14, welche offen ist. Durch ein Verstellen der beiden Dachschalen 6,7 entlang ihrer Flächennormalen und ein Verschieben der beiden Dachschalen 6,7 in Flächenrichtung aufeinander zu ist es möglich die vordere Dachschale 6 in die hintere Dachschale 7 einzuschieben, wobei die Oberschale 31 der vorderen Dachschale 6 zwischen die Ober- und die Unterschale 31' und 32' der hinteren Dachschale 7 geschoben wird.

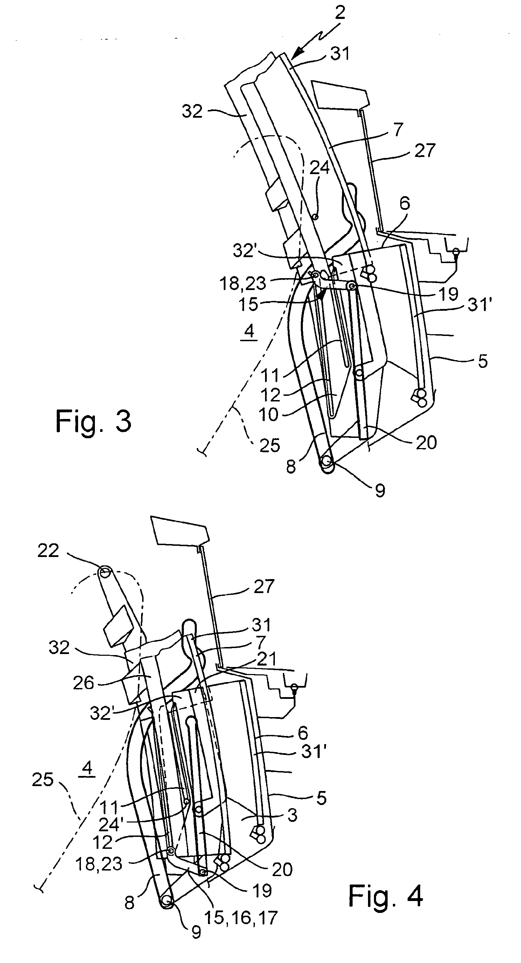

Im geöffneten Zustand ist dabei das Verdeck 2 in dem oben beschriebenen Stauraum 3 platzsparend hinter den Fahrzeugsitzen 4 und vor der Schottwand 5 verstaut (vgl. Fig. 4), ohne dass ein in Fahrtrichtung hinter der Schottwand 5 liegendes Kofferraumvolumen beeinträchtigt wird. Gleichzeitig ist das Verdeck 2 im geöffneten Zustand so im Stauraum 3 untergebracht, dass es die Sicht durch eine Heckscheibe 27 nicht behindert.

Des Weiteren ist auf jeder Fahrzeugseite jeweils eine an der Karosserie angeordnete karosserieseitige erste Führung 8 sowie jeweils ein entsprechendes darin eingreifendes, an der hinteren Dachschale 7 angeordnetes verdeckseitiges erstes Führungsglied 9 vorgesehen, welches während des Verstellvorgangs zwischen dem geöffneten und dem geschlossenen Zustand bzw. umgekehrt, entlang der ersten Führung 8 verstellt, bzw. verschoben wird (vgl. Fig. 1 bis 4).

Gemäß den Fig. 1 bis 4 weist die erste karosserieseitige Führung 8 in einem oberen Bereich einen S-förmigen Verlauf auf, wodurch ein parabelförmiges Verschwenken eines vorderen Endes der vorderen Dachschale 6 bzw. des Verdecks 2 während des Öffnens und des Schließens erreicht wird.

Entsprechend den Fig. 1 bis 4 ist auf jeder Fahrzeugseite jeweils eine an der Karosserie angeordnete karosserieseitige zweite Führung 10 mit jeweils einer ersten und einer zweiten Führungsschiene 11 bzw. 12 vorgesehen. Die erste und die zweite karosserieseitige Führungsschiene 11,12 sind dabei in Schließrichtung des Verdecks 2 aufeinander zu verlaufend ausgebildet. Dies bewirkt beim Einfahren eines zweiten verdeckseitigen Führungsgliedes 23 in die zweite Führungsschiene 12 ein Öffnen bzw. ein Schließen einer Verschlusseinrichtung 15, über welche bei geschlossenem Verdeck 2 die Hinterkante 13 der vorderen Dachschale 6 mit der Vorderkante 14 der hinteren Dachschale 7 fest verbunden ist. Die Verschlusseinrichtung 15 kann dabei als Schwenkhebel 16 oder als Viergelenk 17 ausgebildet sein über welchen(s) die vordere und die hintere Dachschale 6,7 verschwenkbar an einander gelagert sind.
Wie in den Fig. 1 bis 4 gezeigt, ist der Schwenkhebel 16 oder alternativ das Viergelenk 17 über ein erstes Schwenkglied 18 an der vorderen Dachschale 6 und über ein zweites Schwenkglied 19 an der hinteren Dachschale 7 drehbar gelagert, wobei das zweite Schwenkglied 19 zusätzlich in einer Führungsschiene 20, welche fest mit der hinteren Dachschale 7 verbunden ist, verstellbar gelagert ist.

Entsprechend den Darstellungen weisen die vordere und die hintere Dachschale 6,7 jeweils eine verdeckseitige Führungsschiene 26,21 auf, in welchen eine karosserieseitige Umlenkrolle 22 beim Öffnen und Schließen des Verdecks 2 geführt wird.

Des weiteren ist an der vorderen Dachschale 6 ein verdeckseitiges zweites und ein drittes Führungsglied 23,24 angeordnet, wobei das zweite Führungsglied 23 das erste Schwenkglied 18 des Schwenkhebels 16 bzw. des Viergelenks 17 bildet. Beim Öffnen des Verdecks 2 greift das zweite verdeckseitige Führungsglied 23 in die zweite Führungsschiene 12 der zweiten karosserieseitigen Führung 10 ein und wird in dieser geführt wird, wogegen das dritte verdeckseitige Führungsglied 24 in die erste Führungsschiene 11 der zweiten karosserieseitigen Führung 10 eingreift und entlang dieser geführt wird. Generell ist vorgesehen, dass das zweite verdeckseitige Führungsglied 23 beim Öffnen des Verdecks 2 vor dem dritten verdeckseitigen Führungsglied 24 in die jeweils zugeordnete karosserieseitige Führungsschiene 12,11 eingreift. Umgekehrt gilt beim Schließen des Verdecks 2 sinngemäß dasselbe.

Des weiteren kann eine in den Figuren nicht dargestellte Antriebseinrichtung vorgesehen sein, welche über einen entsprechenden Steuerungsbefehl das Verdeck 2 automatisch öffnet und/oder schließt. Prinzipiell ist aber auch eine Betätigung des Verdecks 2 rein manuell oder manuell mit einer Gewichtsentlastung möglich, wobei die Masse des Verdecks 2 sowie eventuelle Ergonomiebelange von Fahrzeuginsassen eine Entscheidungsbasis für ein entsprechendes Antriebskonzept darstellen.

Insbesondere ermöglicht die vorgeschlagene Kinematik ein Öffnen und Schließen des Verdecks 2, ohne dass dazu die Rückenlehnen der Fahrzeugsitze 4 nach vorn verschwenkt werden müssen. Hinzu kommen die kurzen Handlingszeiten, die geringen Bedienkräfte, die Ganzjahrestauglichkeit, die ansprechende Coupé-Optik sowie Vorteile bei der Klimatisierung und den Innengeräuschen.

Im Folgenden soll kurz die Funktionsweise des Verdecks 2 beim Öffnen und Schließen erläutert werden:

Fig. 1 zeigt das Kraftfahrzeug 1 bei geschlossenem Verdeck 2, d.h. mit zwei eine im wesentlichen durchgehende Dachfläche bildenden Dachschalen 6 und 7. Das verdeckseitige erste Führungsglied 9 ist im oberen Bereich der karosserieseitigen ersten Führung 8 und die Verschlusseinrichtung 15 befindet sich in verschlossenem Zustand, in welchem sie die Hinterkante 13 der vorderen Dachschale 6 fest mit der Vorderkante 14 der hinteren Dachschale 7 verbindet.

Zum Öffnen des Verdecks 2 verstellt eine nicht dargestellte Antriebseinrichtung bzw. ein beliebiger Fahrzeuginsasse das Verdeck 2 derartig, dass sich das erste Führungsglied 9 entlang der ersten Führung 8 nach unten bewegt.

Erst in einer Öffnungsposition, in welcher das Verdeck 2 bereits teilweise hinter die Fahrzeugsitze 4 in den dafür vorgesehenen Stauraum 3 abgesenkt ist, fährt das verdeckseitige zweite Führungsglied 23 in die zweite karosserieseitige Führungsschiene 12 der zweiten Führung 10 ein und bewirkt dadurch eine kinematische Zwangsbewegung, welche die Verschlusseinrichtung 15 öffnet (vgl. Fig. 3). Beim weiteren Öffnen der Verschlusseinrichtung 15 wird durch das weitere Verschwenken des Schwenkhebels 16 bzw. durch das weitere Verfahren des zweiten Führungsgliedes 23 in der zweiten Führungsschiene 12, die vordere Dachschale 6 im Wesentlichen orthogonal zu ihrer Dachfläche gegenüber der hinteren Dachschale 7 verstellt.

Die Verstellbewegung wird zusätzlich verstärkt, sobald das verdeckseitige dritte Führungsglied 24 in die erste karosserieseitige Führungsschiene 11 der zweiten Führung 8 eingreift. Da die erste Führungsschiene 11 in Öffnungsrichtung des Verdecks 2 einen von der zweiten Führungsschienen 12 abgewandten Verlauf aufweist, wird während des weiteren Öffnens des Verdecks 2 dieses bzw. werden die beiden ineinander geschobenen Dachschalen 6 und 7 in eine der rückwärtigen Sitzkontur 25 angenäherte Position verstellt.

Im vollständig geöffneten Zustand gemäß Fig. 4 hat das erste Führungsglied 9 einen unteren Endpunkt der ersten karosserieseitigen Führung 8 erreicht, ebenso wie das erste Schwenkglied 18 einen unteren Endpunkt der zweiten karosserieseitigen Führungsschiene 12, bzw. das zweite Schwenkglied 19 einen unteren Endpunkt der ersten karosserieseitigen Führungsschiene 11, erreicht hat. Gleichzeitig ist die karosserieseitige Umlenkrolle 22, welche zuerst die Führungsschiene 21 und danach die Führungsschiene 26 durchlaufen hat, aus letzterer ausgetreten.

Zusammenfassend lassen sich die wesentlichen Merkmale der Erfindung wie folgt charakterisieren:

Das erfindungsgemäße Kraftfahrzeug 1 sieht vor, bei einem Kraftfahrzeug 1 mit einem eine vordere und eine hintere Dachschale 6,7 aufweisenden und zu öffnenden Verdeck 2, welches in einem geschlossenen Zustand eine Dachöffnung zwischen einer A-Säule und einer B-Säule verdeckt und welches in einem geöffneten Zustand in einen Stauraum 3 eingefahren ist, die beiden Dachschalen 6 und 7 jeweils zweischalig auszubilden und zum Öffnen des Verdecks 2 diese ineinander zu schieben. Durch die erfindungsgemäße Lösung wird ein zweischaliges und zweiteiliges Verdeck 2 geschaffen, welches durch kurze Handlingszeiten sowie geringe Bedienkräfte charakterisiert ist.

Gleichzeitig benötigen die ineinander geschobenen Dachschalen 6 und 7 wenig Platz, so dass der für das Verdeck 2 vorgesehene Stauraum 3 relativ klein ausgelegt werden kann.

## Patentansprüche

1. Kraftfahrzeug (1), insbesondere ein zweisitziges Cabriolet,
- mit einem zu öffnenden Verdeck (2), das eine vordere Dachschale (6) und eine hintere Dachschale (7) aufweist,
- wobei in einem geschlossenen Zustand des Verdecks (2) die Dachschalen (6,7) eine durchgehende Dachfläche bilden und eine Dachöffnung (28) zwischen einer A-Säule (29) und einer B-Säule (30) verdecken,
- wobei in einem geöffneten Zustand des Verdecks (2) die Dachschalen (6,7) in einen Stauraum (3) eingefahren sind, welcher hinter den Fahrzeugsitzen (4) und vor einer Schottwand (5) angeordnet ist,
**dadurch gekennzeichnet,**
- **dass** die beiden Dachschalen (6,7) jeweils einen zweischaligen Aufbau aufweisen,
- **dass** die Dachschalen (6,7) zum Öffnen des Verdecks (2) ineinander schiebbar ausgebildet sind.

2. Kraftfahrzeug nach Anspruch 1,
**dadurch gekennzeichnet,**
**dass** auf jeder Fahrzeugseite jeweils eine an der Karosserie angeordnete karosserieseitige erste Führung (8) sowie jeweils ein entsprechendes darin eingreifendes, an der hinteren Dachschale (7) angeordnetes, verdeckseitiges erstes Führungsglied (9) vorgesehen ist.

3. Kraftfahrzeug nach Anspruch 2,
**dadurch gekennzeichnet,**
**dass** die erste karosserieseitige Führung (8) in einem oberen Bereich einen S-förmigen Verlauf aufweist.

4. Kraftfahrzeug nach einem der Ansprüche 1 bis 3,
**dadurch gekennzeichnet,**
**dass** auf jeder Fahrzeugseite jeweils eine an der Karosserie angeordnete karosserieseitige zweite Führung (10) mit jeweils einer ersten und einer zweiten Führungsschiene (11,12) vorgesehen ist.

5. Kraftfahrzeug nach Anspruch 4,
**dadurch gekennzeichnet,**
**dass** die erste und die zweite karosserieseitige Führungsschiene (11,12) in Schließrichtung des Verdecks (2) aufeinander zu verlaufend ausgebildet sind.

6. Kraftfahrzeug nach einem der Ansprüche 1 bis 5,
**dadurch gekennzeichnet,**
**dass** bei geschlossenem Verdeck (2) eine Hinterkante (13) der vorderen Dachschale (6) mit einer Vorderkante (14) der hinteren Dachschale (7) über eine Verschlusseinrichtung (15) fest verbunden ist.

7. Kraftfahrzeug nach Anspruch 6,
**dadurch gekennzeichnet,**
**dass** die Verschlusseinrichtung (15) als Schwenkhebel (16) oder als Viergelenk (17) ausgebildet ist, über den/das die vordere und die hintere Dachschale (6,7) verschwenkbar aneinander gelagert sind.

8. Kraftfahrzeug nach Anspruch 7,
**dadurch gekennzeichnet,**
- **dass** der Schwenkhebel (16) oder das Viergelenk (17) über ein erstes Schwenkglied (18) an der vorderen Dachschale (6) drehbar gelagert ist und
- **dass** der Schwenkhebel (16) oder das Viergelenk (17) über ein zweites Schwenkglied (19) an der hinteren Dachschale (7) drehbar gelagert ist.

9. Kraftfahrzeug nach Anspruch 8,
**dadurch gekennzeichnet,**
**dass** das zweite Schwenkglied (19) in einer Führungsschiene (20), welche fest mit der hinteren Dachschale (7) verbunden ist, verstellbar gelagert ist.

10. Kraftfahrzeug nach einem der Ansprüche 1 bis 9,
**dadurch gekennzeichnet,**
**dass** die vordere und die hintere Dachschale (6,7) jeweils eine verdeckseitige Führungsschiene (26,21) aufweisen.

11. Kraftfahrzeug nach Anspruch 10,
**dadurch gekennzeichnet,**
**dass** auf jeder Fahrzeugseite eine karosserieseitige Umlenkrolle (22) vorgesehen ist, welche die beiden verdeckseitigen Führungsschienen (26,21) beim Öffnen und Schließen des Verdecks (2) durchläuft.

12. Kraftfahrzeug nach einem der Ansprüche 1 bis 11,
**dadurch gekennzeichnet,**
**dass** die vordere Dachschale (6) ein verdeckseitiges zweites und ein drittes Führungsglied (23,24) aufweist.

13. Kraftfahrzeug nach den Ansprüchen 8 und 12,
**dadurch gekennzeichnet,**
**dass** das zweite Führungsglied (23) das erste Schwenkglied (18) des Schwenkhebels (16) oder des Viergelenks (17) bildet.

14. Kraftfahrzeug nach Anspruch 12 oder 13,
**dadurch gekennzeichnet,**
- **dass** beim Öffnen des Verdecks (2) das zweite verdeckseitige Führungsglied (23) in die zweite Führungsschiene (12) der zweiten karosserieseitigen Führung (10) eingreift und in dieser geführt wird, und
- **dass** beim Öffnen des Verdecks (2) das dritte verdeckseitige Führungsglied (24) in die erste Führungsschiene (11) der zweiten karosserieseitigen Führung (10) eingreift und in dieser geführt wird.

15. Kraftfahrzeug nach einem der Ansprüche 12 bis 14,
**dadurch gekennzeichnet,**
**dass** das zweite verdeckseitige Führungsglied (23) beim Öffnen des Verdecks (2) vor dem dritten verdeckseitigen Führungsglied (24) in die jeweils zugeordnete karosserieseitige Führungsschiene (12,11) eingreift.

16. Kraftfahrzeug nach einem der Ansprüche 6 bis 15,
**dadurch gekennzeichnet,**
**dass** zum Öffnen und/oder Schließen der Verschlusseinrichtung (15) eine Zwangskinematik vorgesehen ist.

17. Kraftfahrzeug nach einem der Ansprüche 1 bis 16,
**dadurch gekennzeichnet,**
**dass** das Verdeck (2) im geöffnetem Zustand im wesentlichen nahe und entlang einer rückwärtigen Sitzkontur (25) angeordnet ist.

18. Kraftfahrzeug nach einem der Ansprüche 1 bis 17,
**dadurch gekennzeichnet,**
**dass** eine Antriebseinrichtung zum selbsttätigen Öffnen und/oder Schließen des Verdecks (2) vorgesehen ist.
